# EUROPÄISCHE PATENTSCHRIFT

(11) **EP 0 370 304 B1**
(45) Veröffentlichungstag und Bekanntmachung des Hinweises auf die Patenterteilung: **20.07.1994**
(21) Anmeldenummer: 89120656.7
(22) Anmeldetag: 08.11.1989
(51) Int. Cl.: A01D 78/10

(54) **Heuwerbungsmaschine**
Hay-making machine
Faneuse agricole

(30) Priorität: 16.11.1988 DE 8814325 U
(43) Veröffentlichungstag der Anmeldung: 30.05.1990
(73) Patentinhaber: Alois Pöttinger Maschinenfabrik GmbH, A-4710 Grieskirchen (AT)
(72) Erfinder: Mairhuber, Josef, A-4722 Peuerbach (AT)
(74) Vertreter: Dupal, Helmut, Dipl-Ing.

(56) Entgegenhaltungen:
- EP-A- 0 064 292
- EP-A- 0 161 610
- DE-U- 8 516 603
- FR-A- 1 463 175
- FR-A- 2 076 094
- FR-A- 2 369 788
- GB-A- 986 363

## Beschreibung

Die Erfindung bezieht sich auf eine Heuwerbungsmaschine, insbesonders zum Streuen und Wenden von Halmgut.

Solche Maschinen werden zum Streuen von Mähschwaden oder Nachtschwaden und zum Wenden von Halmgut eingesetzt. Dabei sind die Zinkenräder an einem Maschinenrahmen angebracht, der quer zur Fahrtrichtung der Maschine ausgerichtet ist, mit Stützrädern einzeln auf dem Boden geführt und mit der Drehachse in Fahrtrichtung geneigt, wobei sie von einem Schlepper her angetrieben, paarweise zusammenlaufend das Halmgut erfassen und hinter sich auseinanderstreuen.

Der Maschinenrahmen ist mit einem Zugbalken fest verbunden, der an seinem vorderen Ende an einem Anbaubock für den Anschluß an die Dreipunktanbauvorrichtung eines landwirtschaftlichen Zugfahrzeuges befestigt ist, der in abgesenkter Arbeitsstellung der Maschine das Verschwenken der Maschine um eine lotrechte Achse gestattet, in angehobener Transportstellung aber unterbindet.

Bei ihrer Arbeit wirken auf die einzelnen Rechräder Widerstände vom Boden, von Hindernissen oder Erntegutanhäufungen her ein, die bei Maschinen mit mehreren Rechrädern und insbesondere solchen größeren Durchmessers, verstärkt auf Maschinenrahmen, Zugbalken und Anbaubock und deren Verbindungsstellen Kräfte ausüben, die zu Überlastungen und Schäden führen können.

Bei bisher bekannten Maschinen dieser Art hat man versucht, diese Kräfte durch Federelemente, die von einem Zugbalken auf die beiden Seiten der Anbauvorrichtung wirken, aufzufangen und zu mildern, doch sind diese bekannten Federelemente wie sie z.B. aus der FR-A-2076094 bekannt geworden sind, besonders wegen der langen Federn und ihres Aufbaues aufwendig und überdies setzen sie die Federn in der angehobenen Transportstellung der Maschine nicht selbsttätig außer Funktion und beim Verschwenken während der Arbeit wird das der Schwenkung abgewandte Federelement nicht außer Wirkung gesetzt, wodurch die Dämpfung von Schwingungen ungenügend ist.

Aus der EP-A-64292 ist eine Heuwerbungsmaschine zu entnehmen, bei der der Zugbalken um eine lotrechte Schwenkachse zwischen zwei Anschlägen verschwenkbar gelagert ist und die Maschine beim Anheben in Transportstellung um die Unterlenker nach unten verschwenkt, wobei der verschiebbare Oberlenker mit einer Verriegelungsvorrichtung verriegelt, welche die seitliche Verschwenkbarkeit der Maschine aufhebt.

Nachteilig bei dieser Ausführungsform ist es, daß weder bei der seitlichen Verschwenkbarkeit noch bei der Verschwenkung in die Transportstellung eine Dämpfung der Bewegung vorzusehen ist.

Bei Anwendung der Federelemente wie sie in der erstgenannten DS beschrieben sind, ist bei seitlichen Verschwenkbewegungen nur eine geringe Dämpfung möglich, weil beiderseitig die Federelemente gleichermaßen aber gegensinnig wirksam sind und bei der Höhenverschwenkung beim Übergang in die Transportstellung und umgekehrt bleiben die Federelemente wirksam, indem das eine Energie speichert und das andere abgibt, wodurch stets Schwingungen an der Maschine auftreten.

Aufgabe der Erfindung ist es, bei Maschinen der vorgenannten Art die Auswirkungen von Stößen oder unterschiedlichen Widerständen, die vom Boden her auf die Maschine wirken, ohne wesentlichen Aufwand zu mindern, um mechanische Überlastungen der Maschine zu vermeiden.

Diese Aufgabe wird bei einer Maschine nach Oberbegriff des Anspruches 1 durch die Merkmale des kennzeichnenden Teiles dieses Anspruches gelöst.

Durch die beidseitige Anordnung von federnden, vorgespannten Dämpfungselementen am Maschinenrahmen, die einseitig auf Druck ansprechen und Schwenkbewegungen des Rahmens dämpfen, ist sichergestellt, daß Überlastungen im Bereich des Maschinenrahmens, des Zugbalkens und des Anbaubockes vermieden werden.

Die Anwendung von federnden Dämpfungselementen ergibt besonders bei größeren Abständen zwischen den Anlenkstellen eine sehr einfach und wirksam zu verwirklichende Maßnahme. Die Federwirkung stellt dabei die Einstellung der Anordnung in die Grundstellung sicher. Von besonderer Bedeutung ist dabei, daß das Federelement als Druckfeder ausgebildet und vorgespannt ist.

Die Unteransprüche 2 bis 9, die ausdrücklich gleichzeitig einen Bestandteil der Beschreibung bilden, betreffen besonders vorteilhafte Ausgestaltungen der Erfindung.

Eine besonders einfache und zweckmäßige Gestaltung des federnden Dämpfungselementes ergibt sich, indem ein Übertragungsstück an einem Teil des federnden Dämpfungselementes mit dem zweiten Teil des federnden Dämpfungselementes so in dauerndem Eingriff steht, daß dieser erst nach Verschwenken des Maschinenrahmens gegenüber dem Anbaubock um einen geringen Schwenkwinkel, auf den zweiten Teil einwirkt.

Für die einwandfreie, leichtgängige Führung ist die Anwendung einer Führungsbuchse besonders vorteilhaft und eine stabile Einstellung der federnden Dämpfungselemente wird erreicht, wenn in der Ruhestellung des federnden Dämpfungselementes das Übertragungsstück an der Führungsbuchse anliegt und damit die Druckfeder am weitesten entspannt ist und der zweite Teil des federnden Dämpfungselementes in dem Übertragungsstück an dessen verschlossenem Ende anliegt.

Bei einer Schwenkbewegung des Maschinenrahmens zieht sich die Führungsstange - der zweite Teil des federnden Dämpfungselementes - frei aus dem Übertragungsstück heraus wenn sich der Abstand zwischen Maschinenrahmen und Anbaubock vergrößert und schiebt im anderen federnden Dämpfungselement das Übertragungsstück gegen die vorgespannte Druckfeder, diese zusammendrückend, wodurch die Wucht der Schwenkbewegung gebremst wird.

Beim Aufheben der Maschine vom Boden in die Transportstellung wird die Verschwenkbarkeit der Schwenkachse des Zugbalkens festgelegt und gleichzeitig die Druckfeder unter Abstützung eines Bruchteiles des Maschinengewichtes zusammengedrückt, sodaß die verbleibende Federwirkung unter der Wirkung des Maschinengewichtes praktisch ausgeschaltet ist.

Weiters besteht die Möglichkeit ein Dämpfungselement wirkungsmäßig parallel zwischen Anbaubock und Zugbalken einzuschalten, wodurch wesentlich kürzere und damit wesentlich billigere Stoßdämpfungsglieder verwendbar sind, oder zwischen Anbaubock und Maschinenrahmen einzuschalten, um eine zusätzliche Dämpfung von besonders starken Stoßschwingungen zu erreichen.

Der Widerstand der Stoßdämpfungsglieder wird dann so eingestellt, daß bei Anlenkung an der Anlenkstelle des federnden Dämpfungselementes ein geringerer und bei Anlenkung zwischen dieser Anlenkstelle und der lotrechten Schwenkachse des Zugbalkens entsprechend dem Abstand ein höherer Dämpfungswiderstand eingestellt ist.

Besonders günstig ist es ein bekanntes Stoßdämpfungsglied als Dämpfungselement anzuwenden.

Die Erfindung wird nachstehend an Hand eines Ausführungsbeispieles der Zeichnung beschrieben.

Es zeigt:

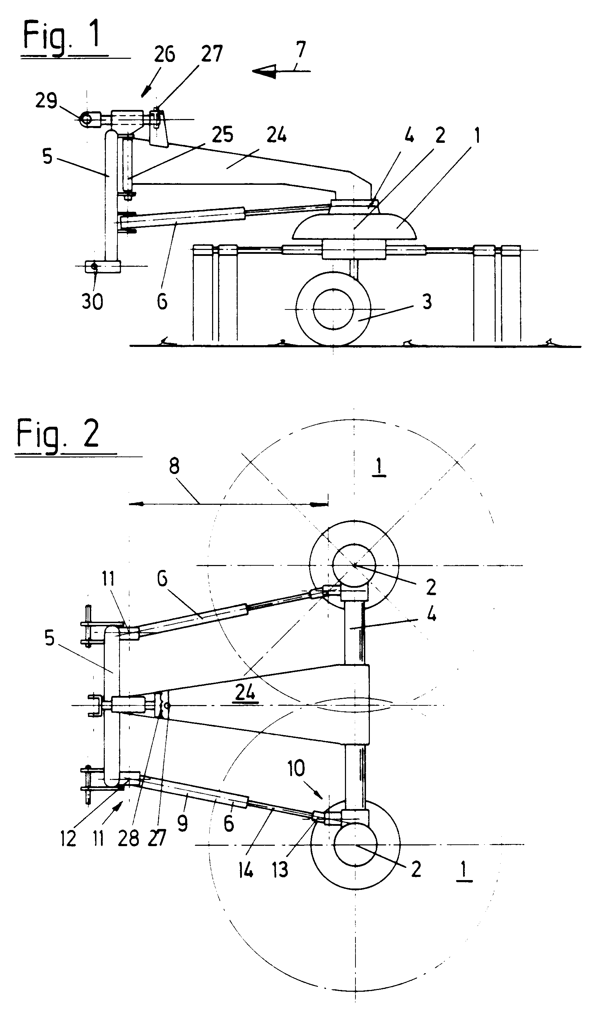

- Fig. 1: Die Seitenansicht einer Heuwerbungsmaschine, schematisch,
- Fig. 2: die Draufsicht auf eine Heuwerbungsmaschine, schematisch,
- Fig. 3: den Längsschnitt durch ein federndes Dämpfungselement und
- Fig. 4: die Draufsicht auf eine Heuwerbungsmaschine mit Dämpfungselementen zusätzlich zu federnden Dämpfungselementen, schematisch.

Die Heuwerbungsmaschine weist mehrere gegenläufig angetriebene, ineinanderlaufende Rechräder 1 auf, die quer zur Fahrtrichtung 7 an einem Maschinenrahmen 4 angebracht sind und aufrechte Rechradachsen 2, die mit Stützrädern 3 auf dem Boden geführt sind.

Der Maschinenrahmen 4 ist mit einem in Fahrtrichtung 7 verlaufenden Zugbalken 24 fest verbunden, der über eine lotrechte Schwenkachse 25 mit einem Anbaubock 5 für den Anschluß an die Dreipunktanbauvorrichtung eines landwirtschaftlichen Zugfahrzeuges seitlich verschwenkbar verbunden ist.

In der Arbeitsstellung der Maschine, bei der die Stützräder 3 auf dem Boden ruhen, ist die Schwenkachse 25 im wesentlichen frei beiderseits schwenkbar, während in der angehobenen Transportstellung die Stützräder 3 vom Boden abgehoben sind, wodurch sich der Riegel 27 in die Raste 28 der Riegelvorrichtung 26, die mit dem oberen Anlenkpunkt 29 für den Dreipunktanbau verbunden ist, einlegt und die Verschwenkbarkeit der Schwenkachse 25 sperrt.

An dem Maschinenrahmen 4 ist beiderseits des Zugbalkens 24 ein federndes Dämpfungselement 6 mit der Öse 13 einer Führungsstange 14 an der Anlenkstelle 10 und andernends mit der Bohrung 12 des rohrförmigen Teiles 9 seitlich am Anbaubock 5 an der Anlenkstelle 11 im Bereich der unteren Anlenkpunkte 30 angelenkt und überbrückt den Abstand 8 zwischen Maschinenrahmen 4 und Anbaubock 5.

Das federnde Dämpfungselement 6 besteht aus dem rohrförmigen Teil 9 und aus der Führungsstange 14, die in einer Gleitführung 19 einer Führungsbuchse 20 des rohrförmigen Teiles 9 an dessen führungsstangenseitigem Ende 21 geführt ist.

Die Führungsstange 14 ragt in der Ruhestellung 18 des federnden Dämpfungselementes 6 bis nahe an das verschlossene Ende 22 des rohrförmigen Stückes 23 des Übertragungsstückes 15, das in dieser Stellung zusammen mit einem Führungsteil 17 des Übertragungsstückes 15 in dem rohrförmigen Teil 9 längsverschieblich geführt ist und an der Führungsbuchse 20 anliegt. In dieser Stellung ist es von einer Druckfeder 16 gehalten, die sich auf dem Führungsteil 17 und andernends an einem Anschlag in Form eines Schraubenbolzens 31 abstützt.

Wird der Maschinenrahmen 4 infolge einer einwirkenden Widerstandskraft seitlich gegenüber dem Anbaubock 5 verschwenkt, so wird die Führungsstange 14 des federnden Dämpfungselementes 6 auf jener Seite des Maschinenrahmens 4, auf der sich der Abstand 8 zum Anbaubock 5 vergrößert, um die entsprechende Länge ungehindert aus dem rohrförmigen Stück 23 des Übertragungsstückes 15 herausgezogen, während auf der gegenüberliegenden Seite des Maschinenrahmens 4, auf der sich der Abstand 8 zum Anbaubock 5 entsprechend verkleinert, die Führungsstange 14 das Übertragungsstück 15 gegen die Kraft der Druckfeder 16 in den rohrförmigen Teil 9 des federnden Dämpfungselementes 6 hineinschiebt, an dem verschlossenen Ende 22 zur Anlage kommt und durch Weiterschieben die Wucht der Schwenkbewegung verringert oder die Bewegung sogar gedämpft zum Stillstand bringt.

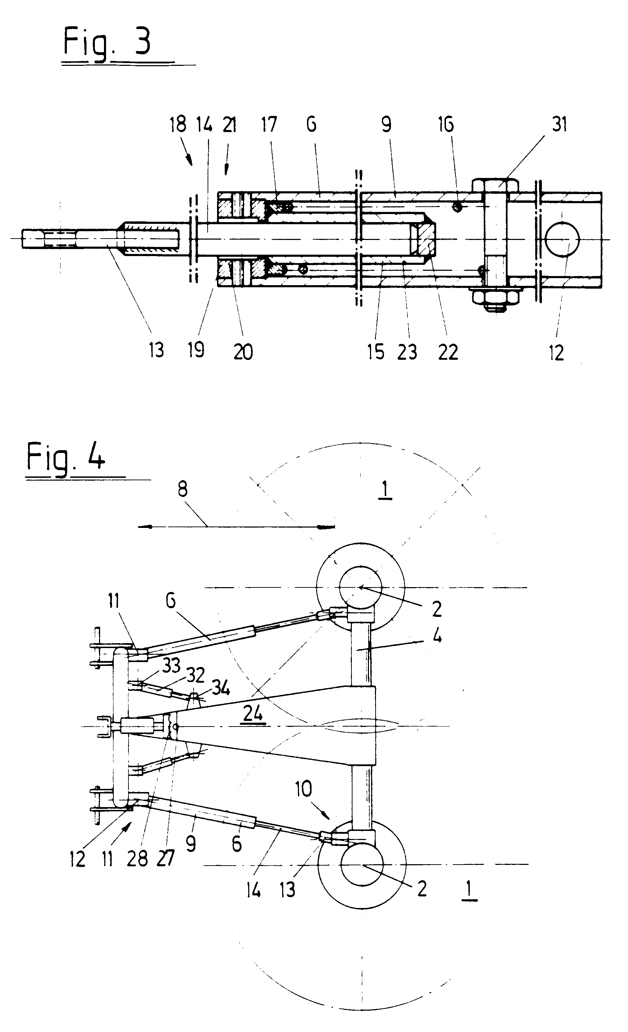

In Fig. 4 ist eine Anordnung dargestellt, bei der zusätzlich zu den federnden Dämpfungselementen 6 parallel dazu Dämpfungselemente 32, die als bekannte Stoßdämpfungsglieder ausgeführt sein können, eingeschaltet sind, deren eine Anlenkstelle 33 am Anbaubock zwischen den Anlenkstellen 11 der federnden Dämpfungselemente 6 und der lotrechten Schwenkachse 25 des Zugbalkens 24 angeordnet ist, während die zweite Anlenkstelle 34 am Zugbalken 24 selbst angebracht ist. Genauso können die Anlenkstellen 33 und 11 zusammenfallen und/oder die Anlenkstellen 34 am Maschinenrahmen 4 angebracht sein.

Die beiden Dämpfungselemente 32 ergeben ein rascheres Abklingen von Schwingungen, die durch Stöße ausgelöst sind und setzen der Verschwenkung des Maschinenrahmens 4 sofort einen erhöhten Anfangswiderstand entgegen.

Am preisgünstigsten ist es, wenn kurze Dämpfungselemente 32 verwendet werden, so daß die in Fig.4 dargestellte Lösung dafür besonders vorteilhaft ist.

Wird das federnde Dämpfungselement 6 allein durch ein Dämpfungselement in Form eines Stoßdämpfungsgliedes ersetzt, so erhält man zwar sehr gute Dämpfungseigenschaften insgesamt, doch ist die Rückstellung in die mittlere Grundstellung nicht zuverlässig sichergestellt, wie bei Anwendung eines federnden Dämpfungselementes 6 und ist daher als Ersatz nicht geeignet.

### Bezugszeichenverzeichnis :

- 1: Rechrad
- 2: Rechradachse
- 3: Stützrad
- 4: Maschinenrahmen
- 5: Anbaubock
- 6: federndes Dämpfungselement
- 7: Fahrtrichtung der Maschine
- 8: Abstand zwischen Anbaubock 5 und Maschinenrahmen 5
- 9: rohrförmiger Teil des federnden Dämpfungselementes 6
- 10: Anlenkstelle des federnden Dämpfungselementes 6 am Maschinenrahmen 4
- 11: Anlenkstelle des federnden Dämpfungselementes 6 am Anbaubock 5
- 12: Bohrung des rohrförmigen Teiles 9
- 13: Öse der Führungsstange 14
- 14: Führungsstange des federnden Dämpfungselementes 6
- 15: Übertragungsstück
- 16: Druckfeder
- 17: Führungsteil des Übertragungsstückes 15
- 18: Ruhestellung des federnden Dämpfungselementes 6
- 19: Gleitführung für die Führungsstange 14
- 20: Führungsbuchse des rohrförmigen Teiles 9
- 21: führungsstangenseitiges Ende des rohrförmigen Teiles 9
- 22: verschlossenes Ende des Übertragungsstückes 15
- 23: rohrförmiges Stück des Übertragungsstückes 15
- 24: Zugbalken
- 25: lotrechte Schwenkachse des Zugbalkens 24
- 26: Riegelvorrichtung
- 27: Riegel
- 28: Raste
- 29: oberer Anlenkpunkt des Anbaubockes 5
- 30: unterer Anlenkpunkt des Anbaubockes 5
- 31: Schraubenbolzen des Anschlages für die Druckfeder 16
- 32: weiteres Dämpfungselement
- 33: Anlenkstelle des Dämpfungselementes 32 am Anbaubock 5
- 34: zweite Anlenkstelle des Dämpfungselementes 32 am Zugbalken 24

## Patentansprüche

1. Heuwerbungsmaschine, insbesonders zum Zetten und Wenden von Halmgut, mit mehreren quer zur Fahrtrichtung (7) der Maschine an einem Maschinenrahmen (4) angebrachten, paarweise gegenläufig angetriebenen, teilweise ineinanderlaufenden Rechrädern (1), die in Arbeitsstellung der Maschine über Stützräder (3) an im wesentlichen lotrechten Rechradachsen (2) auf dem Boden abgestützt sind, deren Maschinenrahmen (4) mit einem Zugbalken (24) fest verbunden ist, der an einem Anbaubock (5) für den Anbau an die Dreipunktanhängevorrichtung eines Zugfahrzeuges an einer im wesentlichen lotrechten Schwenkachse (25) gelagert ist und in Arbeitsstellung der Maschine, zwischen Anschlägen beiderseits begrenzt verschwenkbar und in Transportstellung unter dem Gewicht der Maschine an den Unterlenkeranlenkungen (30) der Dreipunktanhängevorrichtung verschwenkt, in einer vorbestimmten Lage festgelegt ist, wobei zwischen Anbaubock (5) und Maschinenrahmen (4) beiderseits ein federndes Element eingesetzt ist, dadurch gekennzeichnet, daß das federnde Element als federndes Dämpfungselement (6), im wesentlichen bestehend aus zwei zueinander verschieblich geführten Teilen, ausgebildet ist, das die seitliche Verschwenkung des Maschinenrahmens (4) gegenüber dem Anbaubock (5) bei Vergrößerung des Abstandes (8) zwischen Anbaubock (5) und Maschinenrahmen (4) an einer Seite desselben ohne Wirkung der Federkraft freigibt und bei der gleichzeitigen Verringerung des Abstandes (8), an der gegenüberliegenden Seite des Zugbalkens (24), mit der Gegenkraft einer vorgespannten Druckfeder (16) des entsprechenden federnden Dämpfungselementes (6) abbremst.

2. Heuwerbungsmaschine nach Anspruch 1, dadurch gekennzeichnet, daß das federnde Dämpfungselement (6) mit einer Bohrung (12) für eine Anlenkstelle (11) an dem Anbaubock (5) und mit einer Öse (13) für die Anlenkstelle (10) an dem Maschinenrahmen (4) versehen ist und aus einem rohrförmigen Teil (9) und einer Führungsstange (14) besteht, die ineinander geführt sind, wobei sich die Führungsstange (14) mit einem Übertragunsstück (15) in dauerndem Eingriff befindet, an dem sich die Druckfeder (16) einenends abstützt.

3. Heuwerbungsmaschine nach Anspruch 2, dadurch gekennzeichnet, daß die Führungsstange (14) in einer Gleitführung (19) einer Führungsbuchse (20) längsverschieblich geführt ist, die am führungsstangenseitigen Ende (21) des rohrförmigen Teiles (9) des federnden Dämpfungselementes (6) eingesetzt ist.

4. Heuwerbungsmaschine nach Anspruch 2, dadurch gekennzeichnet, daß das Übertragungsstück (15) in dem rohrförmigen Teil (9) des federnden Dämpfungselementes (6) mit einem Führungsteil (17) längsverschieblich geführt ist und zusammen mit diesem in Ruhestellung (18) des federnden Dämpfungselementes (6) an der Führungsbuchse (20) anliegt.

5. Heuwerbungsmaschine nach einem der Ansprüche 2 oder 4, dadurch gekennzeichnet, daß das Übertragungsstück (15) in der Ruhestellung (18) des federnden Dämpfungselementes (6) die Führungsstange (14) bis zum verschlossenen Ende (22) in seinem rohrförmigen Stück (23) aufnimmt.

6. Heuwerbungsmaschine nach Anspruch 1, dadurch gekennzeichnet, daß parallel zum federnden Dämpfungselement (6) zwischen Anbaubock (5) und Maschinenrahmen (4) oder Zugbalken (24) beiderseits ein weiteres Dämpfungselement (32) angelenkt ist.

7. Heuwerbungsmaschine nach Anspruch 6, dadurch gekennzeichnet, daß das weitere Dämpfungselement (32) mit einem Ende an der Anlenkstelle (11) des parallelen, federnden Dämpfungselementes (6) angelenkt ist.

8. Heuwerbungsmaschine nach Anspruch 6, dadurch gekennzeichnet, daß das weitere Dämpfungselement (32) mit einem Ende an dem Anbaubock (5) zwischen der Anlenkstelle (11) des federnden Dämpfungselementes (6) und der lotrechten Schwenkachse (25) des Zugbalkens (24) an der Anlenkstelle (33) angelenkt ist.

9. Heuwerbungsmaschine nach einem der Ansprüche 6 bis 8, dadurch gekennzeichnet, daß das weitere Dämpfungselement (32) als Stoßdämpfungsglied ausgebildet ist.

## Claims

1. A hay making machine, especially for the tedding and turning of fodder with a plurality of rake wheels (1) mounted transversally to the direction of machine travel (7) onto a machine frame (4), said rake wheels (1) driven in pairs in a counter-rotating manner and partially meshing, supported in the working position of the machine by means of supporting wheels (3) to substantially vertical rake wheel axles (2) on the ground, the machine frame (4) being rigidly attached to a traction beam (24) that is pivoted on a substantially vertical swivel axle (25) to a coupling member (5) for the coupling to the three-point linkage of a tractor, said traction beam being swivelled in working position and on both sides being limited by the means of stops and in transport position being fixed in a determined position after being swivelled under the weight of the machine at the lower hitch points (30) of the three-point linkage, a spring element being inserted on both sides between the coupling member (5) and the machine frame (4), characterised in that the spring element is designed as a springy shock-absorbing element (6) substantially consisting of two displaceably guided parts, said shock-absorbing element (6) admitting the lateral swivel of the machine frame (4) in respect to the coupling member (5) when the distance (8) between the coupling member (5) and the machine frame (4) is extended on one side of said machine frame (4) without the exercise of any spring force and braking the above mentioned swivel on the opposite side of the traction beam (24) with the counter-force of a loaded compression spring (16) of the respective springy shock-absorbing element (6) at the simultaneous reduction of the distance (8).

2. A hay making machine according to claim 1, characterised in that the springy shock-absorbing element (6) is provided with a bore-hole (12) for a coupling point (11) to the coupling member (5) and with an eye (13) for the coupling point (10) to the machine frame (4) and that it consists of a tubular part (9) and a guide rod (14) that are guided one into another, said guide rod (14) permanently meshing into a transmission member (15), to which the compression spring (16) is supported on one side.

3. A hay making machine according to claim 2, characterised in that the guide rod (14) is guided in a longitudinally displaceable manner in a slide guide (19) of a guide bush (20) that is inserted on that end (21) of the tubular part (9) of the springy shock-absorbing element (6) that is directed to the guide rod (14).

4. A hay making machine according to claim 2, characterised in that the transmission member (15) is guided in a longitudinally displaceable manner with a guide part (17) in the tubular part (9) of the springy shock-absorbing element (6) and in that it rests together with said guide part (17) against the guide buch (20) when the springy shock-absorbing element (6) is in the rest position (18).

5. A hay making machine according to one of the claims 2 or 4, characterised in that the transmission member (15) takes in the guide rod (14) in its tubular part (23) up to the closed end (22) when the springy shock-absorbing element (6) is in the rest position (18).

6. A hay making machine according to claim 1, characterised in that a further shock-absorbing element (32) is coupled on both sides between the coupling member (5) and the machine frame (4) or the traction beam (24) in parallel to the springy shock-absorbing element (6).

7. A hay making machine according to claim 6, characterised in that the further shock-absorbing element (32) is coupled on one side to the coupling point (11) of the parallel springy shock-absorbing element (6).

8. A hay making machine according to claim 6, characterised in that the further shock-absorbing element (32) is coupled on one side to the coupling member (5) between the coupling point (11) of the springy shock-absorbing element (6) and the vertical swivel axle (25) of the traction beam (24) at the coupling point (33).

9. A hay making machine according to claim 6 to 8, characterised in that the further shock-absorbing element (32) is designed as shock-absorbing member.

## Revendications

1. Machine de fenaison, notamment pour l'épandage et le retournement de produits végétaux à tige, comprenant plusieurs roues de ratissage (1) perpendiculaires à la direction de déplacement (7), tournant partiellement les unes dans les autres, entraînées par paires en seuls contraire et montées sur un châssis (4), qui sont supportées au-dessus du sol dans la position de travail de la machine par des axes (2) sensiblement verticaux reposant sur des roues d'appui (3), le châssis (4) de la machine étant relié fermement à un tirant (24) qui est monté sur un support d'attelage (5) pour son raccordement au dispositif d'attelage à trois points d'un véhicule tracteur par un axe de pivotement (25) sensiblement vertical et ce châssis étant fixé dans une position prédéterminée dans la position de travail de la machine en pouvant pivoter de façon limitée entre des butées situées de chaque côté et dans la position de transport en étant basculé sous le poids de la machine sur les articulations (30) des bras inférieurs du dispositif de suspension à trois points, un élément à ressort étant monté de chaque côté entre le support d'attelage (5) et le châssis (4) caractérisés en ce que l'élément à ressort est constitué sous la forme d'un élément d'amortissement à ressort (6), constitué essentiellement par deux parties guidées en translation l'une par rapport à l'autre, lequel élément d'amortissement à ressort libère le mouvement de pivotement latéral du châssis (4) par rapport au support d'attelage (5) sans effet de la force du ressort quand il y a une augmentation de le distance (8) entre le support d'attelage (5) et le châssis (4) sur un côté de celui-ci, et effectue un freinage quand il y a diminution simultanée de la distance (8) sur le côté opposé du tirant (24) par la contre-force d'un ressort de compression précontraint (16) de l'élément d'amortissement à ressort correspondant (6).

2. Machine de fenaison selon la revendication 1, caractérisée en ce que l'élément d'amortissement à ressort (6) comprend un alésage (12) pour constituer une position de raccordement (11) avec le support d'attelage (5) et un oeillet (13) pour constituer la position de raccordement (10) avec le châssis (4), et est constitué par une partie de forme tubulaire (9) et une tige de guidage (14), qui se déplacent l'une dans l'autre, la tige de guidage (14) étant en prise continue avec un élément de transmission (15) sur lequel s'appuie le ressort de compression (16) par une extrémité,

3. Machine de fenaison selon la revendication 2, caractérisée en ce que la tige de guidage (14) est montée de façon mobile en direction longitudinale dans une traversée à glissement (19) d'une douille de guidage (20), qui est disposée à l'extrémité (21) de la partie de forme tubulaire (9) de l'élément d'amortissement à ressort (6) qui est située du côté de la tige de guidage.

4. Machine de fenaison selon la revendication 2, caractérisée en ce que l'élément de transmission (15) est monté de façon mobile en direction longitudinale dans la partie de forme tubulaire (9) de l'élément d'amortissement à ressort (6) par une partie de guidage (17), et s'applique par cette dernière contre la douille de guidage (20) dans la position de repos (18) de l'élément d'amortissement à ressort (6).

5. Machine de fenaison selon l'une des revendications 2 ou 4, caractérisée en ce que, dans la position de repos (18) de l'élément d'amortissement à ressort (6), l'élément de transmission (15) reçoit la tige de guidage (14) jusqu'à l'extrémité fermée (22) de son élément de forme tubulaire (23).

6. Machine de fenaison selon la revendication 1, caractérisée en ce qu'un autre élément d'amortissement (32) est monté parallèlement à l'élément d'amortissement à ressort (6) de chaque côté entre le support d'attelage (5) et le châssis (4) ou le tirant (24).

7. Machine de fenaison selon la revendication 6, caractérisée en ce que l'autre élément d'amortissement (32) est articulé par une extrémité dans la position de raccordement (11) de l'élément d'amortissement à ressort parallèle (6).

8. Machine de fenaison selon la revendication 6, caractérisée en ce que l'autre élément d'amortissement (32) est relié par une extrémité au support d'attelage (5) dans la position de raccordement (33) située entre la position de raccordement (11) de l'élément d'amortissement à ressort (6) et l'axe de pivotement vertical (25) du tirant (24).

9. Machine de fenaison selon l'une des revendications 6 à 8, caractérisée en ce que l'autre élément d'amortissement (32) est constitué sous forme d'un élément d'amortissent de chocs.
